# EUROPEAN PATENT APPLICATION

(11) **EP 4 549 496 A1**
(43) Date of publication of application: **07.05.2025**
(21) Application number: 23207127.4
(22) Date of filing: 31.10.2023
(51) Int. Cl.: C08J 5/18, A41D 31/102, C08K 3/04

(54) **THERMAL CONDUCTIVE AND BREATHABLE MEMBRANE**

(71) Applicant: UC Bacon Company Limited, Taoyuan City 32845 (TW)
(72) Inventor: Wu, Ting Yu, 32054 Taoyuan City (TW); Li, Shan, 23741 New Taipei City (TW)
(74) Representative: Cabinet Chaillot

(57) **Abstract**

A thermally conductive and breathable membrane that oligo-layer graphene with a solid weight ratio of 1~30 wt% and a polyrotaxane with a solid weight content of 0.05 to 10wt% relative to the thermal conductive and breathable membrane to a polyurethane resin, in addition to the moisture permeability and waterproofness of polyurethane resin, the oligo-layer graphene also increase the thermal conductivity, and the dispersibility of oligo-layer graphene is improved by adding polyrotaxane and the extensibility of polyurethane resin is improved, making the formed thermal conductive and breathable membrane enable to maintain extensibility without increasing the membrane thickness.

## Description

### BACKGROUND OF THE INVENTION

### 1. Field of the Invention:

A thermal conductive and breathable membrane, especially to a thermally conductive and breathable membrane that can maintain membrane extensibility without increasing the membrane thickness.

### 2. Description of the Related Art:

There are many hydrogen bonds in the molecular composition of polyurethane, which results in large intermolecular forces, strong adhesion, and stable chemical properties, thus, it is easy to form a membrane with waterproof and moisture-permeable properties, so it is widely used in fabric lamination; Fabrics laminated with membrane with waterproof and moisture-permeable properties are basic standard of outdoor mountaineering jackets, snow jackets and other related products currently on the market. Most waterproof and breathable membrane laminated fabrics emphasize their high moisture permeability and high waterproofness. It protects the wearer from getting wet during heavy rainfall during outdoor sports. The high moisture permeability of the membrane can also help the moisture on the surface of the body to be smoothly discharged to avoid the stuffy feeling of wearing it.

After wearing the fabric for a long time and the moisture accumulated inside and outside the fabric is equal, the moisture permeability of the membrane will be greatly reduced. At this time, the heat absorbed and accumulated by water cannot be effectively transmitted and diffused due to the low thermal conductivity of polyurethane itself, which will make the human body feel uncomfortable and humid. Therefore, in order to improve the thermal conductivity of polyurethane itself without affecting its moisture permeability and waterproofness, some people combine thermal conductive additives into polyurethane membrane to increase heat dissipation and greatly improve consumers' wearing experience; however, after combining thermal conductive additives with polyurethane membrane, the flexibility of the polyurethane membrane will become worse due to the interface incompatibility between the thermal conductive additives and polyurethane, and ultimately the membrane thickness must be increased to maintain membrane extensibility, so as to be able to adhere on the surface of the fabric.

### SUMMARY OF THE INVENTION

A primary objective of the present invention is to achieve the effect of maintaining the stretchability of the membrane without increasing the membrane thickness after adding thermal conductive materials to the polyurethane membrane, so as to solve the problem in the prior art that after the thermal conductive additive is added to the polyurethane membrane, the membrane strength decreases due to the interface incompatibility between the thermal conductive additive and the polyurethane base material, and the membrane thickness needs to be increased for maintaining the stretchability.

Another primary objective of the present invention is to improve the dispersion and arrangement of thermal conductors and thereby increase the thermal conductivity and visible light blocking rate of the membrane.

In order to achieve the above objective, the present invention adds an oligo-layer graphene with a solid weight ratio of 1~30 wt% and a polyrotaxane with a solid weight content of 0.05 to 10wt% relative to the thermal conductive and breathable membrane to a polyurethane resin, in addition to the moisture permeability and waterproofness of polyurethane resin, the oligo-layer graphene also increase the thermal conductivity, and by adding polyrotaxane, the affinity of the linear chain polymers and endcapping groups in its molecular structure with the base surface of graphene can be used to improve the dispersion of oligo-layer graphene in polyurethane resin, and further strengthens the alignment of graphene; At the same time, the reactive functional groups on the cyclic molecules in the polyrotaxane molecular structure can also produce crosslinking reaction with the reactive functional groups of the polyurethane resin and crosslinking agent to generate movable crosslinking points in the material, and further improve the extensibility and flexibility of polyurethane resin (substrate), so that the formed thermally conductive and breathable membrane can maintain extensibility without increasing the membrane thickness.

Also, the strengthening of the alignment of graphene in the polyurethane substrate will improve the stacking density of graphene, and effectively improve the thermal conductivity and light blocking properties of the membrane through the tightly stacked structure.

Also, the formed thermal conductive and breathable membrane has characteristics listed below, the thickness is between 15~40um, the basis weight range is between 20gsm~50gsm, the thermal conductivity coefficient in the plane direction ≧1W/mK, the thermal conductivity coefficient in the vertical direction ≧0.5W/mK, the moisture permeability measured according to JIS L1099-2012B-1 standard is at least 2000g/m²/24h, the water pressure resistance value measured according to JIS L1092B-2009 standard is at least 5000mmH₂O, the visible light transmittance <0.5%, the infrared and ultraviolet blocking rate >99.5%.

Also, the present invention is added with silica with a solid weight ratio of 0.1 to 5wt% to prevent sticking, and a crosslinking agent is added to achieve crosslinking effect. The preferred solid weight ratio of the oligo-layer graphene is 5~10wt%, the preferred solid weight ratio of the polyrotaxane is 0.1~5wt%, the preferred solid weight ratio of the silica is 2~3wt%. The moisture permeability of the polyurethane resin measured according to JIS L1099-2012B-1 standard is at least 10000g/m²/24h, the average molecular weight of the polyrotaxane is between 100,000 and 500,000, at least 95% of the oligo-layer graphene has a lateral size of 6000~8000nm and thickness of 2~3nm, and the oxygen content of oligo-layer graphene is at least less than 0.1%.

Also, the polyrotaxanes include compounds of the linear chain polymers and the cyclic molecules; the linear chain polymers serve as the axis molecules in the compounds and have a molecular weight of more than 10,000 and can be chemically modified by endcapping groups; the cyclic molecules allow the linear chain molecules to pass through, and having at least one reactive group capable of producing a crosslinking reaction with the reactive groups in the polyurethane resin or the crosslinking agent; wherein the main chain polymer of the linear chain polymer includes the copolymers of polyvinyl alcohol, polyvinylpyrrole, polyethylene glycol, polypropylene glycol, polyvinyl acetal resin, polydimethylsiloxane, polyamine, polyethyleneimine, polyolefin, polyester, polyvinyl chloride, polystyrene, acrylonitrile-styrene or derivatives thereof; the endcapping groups includes a dinitrophenyl group, an adamantyl group or a trityl group; the cyclic molecule includes a calixarene compound, a cryptether compound, a cyclic aromatic compound, a macrocyclic amine compound, a crown ether compound or a cyclodextrin compound.

Also, the linear chain polymers are the linear chain polymers based on polyethylene glycol; the cyclic molecules are the cyclodextrin, substituted cyclodextrin, or a reactive groups are further added into the substitution structure to obtain a substituted cyclodextrin compound. The reactive groups added into the cyclic molecules includes hydroxy, carboxyl, acrylic, methacrylic, epoxy or vinyl. The reactive groups in polyurethane resin include carbonyl groups, amine groups, hydroxyl groups and epoxy groups; crosslinking agents are ester polymer compounds containing isocyanate reactive groups, including the polymers or copolymers or derivatives of toluene diisocyanate, diphenylmethane diisocyanate isocyanate, hexamethylene diisocyanate, isophorone diisocyanate, 4,4'-dicyclohexylmethane diisocyanate, xylylene diisocyanate, tetramethylisoxylylene diisocyanate, etc., and the content of isocyanate reactive groups ranges from 5 to 25%.

### BRIEF DESCRIPTION OF THE DRAWINGS

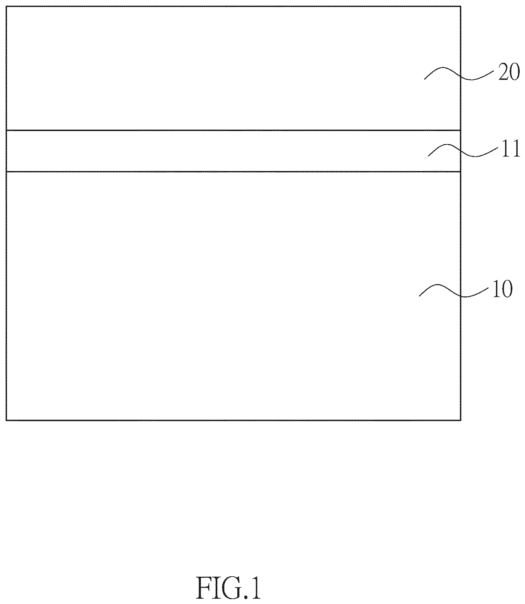

FIG. 1 is a schematic diagram illustrating the structure of the present invention.

### DETAILED DESCRIPTION OF THE PREFERRED EMBODIMENT

Referring to FIG. 1, the manufacturing steps of the thermal conductive and breathable membrane of the present invention is:
a. Dispersing the slurry of high-concentration oligo-layer graphene with a liquid viscosity between 1000 and 3000 cps which includes an active agent, a solvent and an oligo-layer graphene with a solid weight ratio of 1~30 wt%, lateral size is 6000~8000nm, thickness is 2~3nm, and the oxygen content of oligo-layer graphene is at least less than 0.1%; After applying high-speed grinding and shear dispersion, the oligo-layer graphene is reduced to a lateral size of 100nm~1500nm and a thickness of 1.5~2.5nm, and the slurry concentration distribution difference is less than 5%;
b. In a state where the high-concentration oligo-layer graphene dispersion slurry is flowing, polyrotaxane with a solid weight content of 0.05~10wt% and silica powder (anti-sticking agent) with a solid weight ratio of 0.1~5wt% are added in batches, then by shear mixing, the oligo-layer graphene composite fluid is formed with a viscosity range of 5000-10000cps and a slurry particle size distribution D90 is less than 15um; wherein the polyrotaxanes include compounds of the linear chain polymers and the cyclic molecules; the linear chain polymers serve as the axis molecules in the compounds and have a molecular weight of more than 10,000 and can be chemically modified by endcapping groups; the cyclic molecules allow the linear chain molecules to pass through, and having at least one reactive group capable of producing a crosslinking reaction;
c. Using the oligo-layer graphene composite fluid as the base raw material, the polyurethane resin is added in batches under the fluid flow state, and is uniformly mixed by shear mixing to form a graphene polyurethane composite fluid with viscosity range of 1000~1500cps, and the slurry agglomeration particle size distribution D90 is less than 10um;
d. Continuously coat the graphene polyurethane composite fluid on the base substrate **10** with the intermediate release layer **11** by knife coating, comma coating, transfer coating or slot die coating, etc., forming a thermal conductive and breathable membrane **20** with molding width of at least 1540cm, a length of at least 1000m and a molding and drying temperature between 90 and 180°C; and
e. The thermal conductive and breathable membrane **20** is independently formed into a thermal conductive and breathable membrane after release winding; wherein, the release winding refers to reversely winding the thermal conductive and breathable membrane **20** under a certain tension on a certain size the paper roll, if the tension is less than 3kg and the paper roll size is less than 6 inches, the thermal conductive and breathable membrane after release winding needs to be stored for ripening at room temperature for 24 hours; the thickness range of the thermal conductive and breathable membrane after ripening is within 15~40um, basis weight range is 20~50gsm.

### Embodiment 1

a. The active agent, a solvent and an oligo-layer graphene are formed into a the slurry of high-concentration oligo-layer graphene after applying high-speed grinding and shear dispersion; wherein: the carbon content of graphene is ≥99%, the graphene thickness is ≦2.5nm, the average distribution range of graphene membrane diameter is between 0.1µm~1.5µm, the optimal distribution range is between 0.3µm~0.8µm, the surface oxygen content is <0.1%, and a high-concentration oligo-layer graphene dispersion slurry with the concentration difference between the upper and lower parts of the tank for 5% will be generated after 20 minutes of pre-dispersion process;
b. During the flowing state of high-concentration oligo-layer graphene dispersion slurry, sequentially add polyrotaxane SA2405P-20 and silica powder OK-412 then continue high-speed stirring to form a uniformly flowing oligo-layer graphene composite fluid; wherein, high-concentration oligo-layer graphene dispersion slurry/SA2405P-20/OK-412 is mixed at a ratio of 10/1.3/2, the effective addition amount of graphene is 20%, the viscosity range is between 5000~10000cps, and the slurry particle size distribution D90 is less than 15um;
c. Making a graphene-polyurethane composite fluid by mixing raw materials of oligo-layer graphene composite fluid and polyurethane resin; wherein the solid weight content of the polyurethane resin is between 15-20%, the viscosity range is between 800cps~1500cps, and the oligo-layer graphene composite fluid and polyurethane resin are processed in a high-speed homogenization process at a weight ratio of 1/27, with a stirring speed of 2500 rpm, a die diameter of 6 cm, a die spacing of 1 mm, and a processing time of 1 hour. The effective solid content of the graphene-polyurethane composite fluid is between 15-18%, the flow viscosity is between 1000-1500cps;
d. The graphene-polyurethane composite fluid is continuously coated and molding on a base substrate material with the release force to form a thermally conductive and breathable membrane layer; wherein the base substrate material is a release paper with a release layer on the surface, the basis weight is 190~200gsm, and the surface of the release layer of the release paper is continuously coated with the knife coating method, then after high temperature drying, a thermally conductive and breathable membrane layer is formed on the release paper. The continuous coating molding method means that the finished product is finished by one coating, the coating speed is 10-15m/min, the molding width is at least 1540cm, the molding length is at least 1000m, and the molding drying temperature is within the range of 90~180°C, and the effective addition amount of graphene is 3%; and
e. By the release winding process, the thermally conductive and breathable membrane layer is enable to form an independently moldable thermally conductive and breathable membrane; wherein, the process conditions in the release winding process are: the winding speed is 15-20m/min, and the tension is less than 3kg, the paper roll size is less than 6 inches, the thickness of the thermally conductive and breathable membrane is 20um, the basis weight is 22gsm, the horizontal thermal conductivity is 3.04W/mK, the vertical thermal conductivity is 0.11 W/mK, the moisture permeability is 50000g/m²/24h, the water pressure resistance value is 10000mmH₂O, and the visible light transmittance is 0.5%.

### Embodiment 2

a. The active agent, a solvent and an oligo-layer graphene are formed into a the slurry of high-concentration oligo-layer graphene after applying high-speed grinding and shear dispersion; wherein: the carbon content of graphene is ≥99%, the graphene thickness is ≦2.5nm, the average distribution range of graphene membrane diameter is between 0.1µm~1.5µm, the optimal distribution range is between 0.3µm~0.8µm, the surface oxygen content is <0.1%, and a high-concentration oligo-layer graphene dispersion slurry with the concentration difference between the upper and lower parts of the tank for 5% will be generated after 20 minutes of pre-dispersion process;
b. During the flowing state of high-concentration oligo-layer graphene dispersion slurry, sequentially add polyrotaxane SA2405P-20 and silica powder OK-412 then continue high-speed stirring to form a uniformly flowing oligo-layer graphene composite fluid; wherein, high-concentration oligo-layer graphene dispersion slurry/SA2405P-20/OK-412 is mixed at a ratio of 10/0.8/1.2, the effective addition amount of graphene is 20%, the viscosity range is between 5000~10000cps, and the slurry particle size distribution D90 is less than 15um;
c. Making a graphene-polyurethane composite fluid by mixing raw materials of oligo-layer graphene composite fluid and polyurethane resin; wherein the solid weight content of the polyurethane resin is between 15-20%, the viscosity range is between 800cps~1500cps, and the oligo-layer graphene composite fluid and polyurethane resin are processed in a high-speed homogenization process at a weight ratio of 1/13.75, with a stirring speed of 2500 rpm, a die diameter of 6 cm, a die spacing of 1 mm, and a processing time of 1 hour. The effective solid content of the graphene-polyurethane composite fluid is between 15-18%, the flow viscosity is between 1000-1500cps;
d. The graphene-polyurethane composite fluid is continuously coated and molding on a base substrate material with the release force to form a thermally conductive and breathable membrane layer; wherein the base substrate material is a release paper with a release layer on the surface, the basis weight is 190~200gsm, and the surface of the release layer of the release paper is continuously coated with the knife coating method, then after high temperature drying, a thermally conductive and breathable membrane layer is formed on the release paper. The continuous coating molding method means that the finished product is finished by one coating, the coating speed is 10-15m/min, the molding width is at least 1540cm, the molding length is at least 1000m, and the molding drying temperature is within the range of 90~180°C, and the effective addition amount of graphene is 5%; and
e. By the release winding process, the thermally conductive and breathable membrane layer is enable to form an independently moldable thermally conductive and breathable membrane; wherein, the process conditions in the release winding process are: the winding speed is 15~20m/min, and the tension is less than 3kg, the paper roll size is less than 6 inches, the thickness of the thermally conductive and breathable membrane is 20um, the basis weight is 22gsm, the horizontal thermal conductivity is 3.42W/mK, the vertical thermal conductivity is 0.22W/mK, the moisture permeability is 50000g/m²/24h, the water pressure resistance value is 10000mmH₂O, the visible light transmittance is 0.3%, the tensile strength is 285Kgf/cm², and the elongation at break is 326%.

### Embodiment 3

a. The active agent, a solvent and an oligo-layer graphene are formed into a the slurry of high-concentration oligo-layer graphene after applying high-speed grinding and shear dispersion; wherein: the carbon content of graphene is ≥99%, the graphene thickness is ≦2.5nm, the average distribution range of graphene membrane diameter is between 0.1µm~1.5µm, the optimal distribution range is between 0.3µm~0.8µm, the surface oxygen content is <0.1%, and a high-concentration oligo-layer graphene dispersion slurry with the concentration difference between the upper and lower parts of the tank for 5% will be generated after 20 minutes of pre-dispersion process;
b. During the flowing state of high-concentration oligo-layer graphene dispersion slurry, sequentially add polyrotaxane SA2405P-20 and silica powder OK-412 then continue high-speed stirring to form a uniformly flowing oligo-layer graphene composite fluid; wherein, high-concentration oligo-layer graphene dispersion slurry/SA2405P-20/OK-412 is mixed at a ratio of 10/0.6/0.9, the effective addition amount of graphene is 20%, the viscosity range is between 5000~10000cps, and the slurry particle size distribution D90 is less than 15um;
c. Making a graphene-polyurethane composite fluid by mixing raw materials of oligo-layer graphene composite fluid and polyurethane resin; wherein the solid weight content of the polyurethane resin is between 15-20%, the viscosity range is between 800cps~1500cps, and the oligo-layer graphene composite fluid and polyurethane resin are processed in a high-speed homogenization process at a weight ratio of 1/13.75, with a stirring speed of 2500 rpm, a die diameter of 6 cm, a die spacing of 1 mm, and a processing time of 1 hour. The effective solid content of the graphene-polyurethane composite fluid is between 15-18%, the flow viscosity is between 1000-1500cps;
d. The graphene-polyurethane composite fluid is continuously coated and molding on a base substrate material with the release force to form a thermally conductive and breathable membrane layer; wherein the base substrate material is a release paper with a release layer on the surface, the basis weight is 190~200gsm, and the surface of the release layer of the release paper is continuously coated with the knife coating method, then after high temperature drying, a thermally conductive and breathable membrane layer is formed on the release paper. The continuous coating molding method means that the finished product is finished by one coating, the coating speed is 10-15m/min, the molding width is at least 1540cm, the molding length is at least 1000m, and the molding drying temperature is within the range of 90~180°C, and the effective addition amount of graphene is 7%; and
e. By the release winding process, the thermally conductive and breathable membrane layer is enable to form an independently moldable thermally conductive and breathable membrane; wherein, the process conditions in the release winding process are: the winding speed is 15~20m/min, and the tension is less than 3kg, the paper roll size is less than 6 inches, the thickness of the thermally conductive and breathable membrane is 20um, the basis weight is 22gsm, the horizontal thermal conductivity is 4.03W/mK, the vertical thermal conductivity is 0.19W/mK, the moisture permeability is 50000g/m²/24h, the water pressure resistance value is 10000mmH₂O, the visible light transmittance is 0.1%, the tensile strength is 268Kgf/cm², and the elongation at break is 281%.

### Embodiment 4

a. The active agent, a solvent and an oligo-layer graphene are formed into a the slurry of high-concentration oligo-layer graphene after applying high-speed grinding and shear dispersion; wherein: the carbon content of graphene is ≥99%, the graphene thickness is ≦2.5nm, the average distribution range of graphene membrane diameter is between 0.1µm~1.5µm, the optimal distribution range is between 0.3µm~0.8µm, the surface oxygen content is <0.1%, and a high-concentration oligo-layer graphene dispersion slurry with the concentration difference between the upper and lower parts of the tank for 5% will be generated after 20 minutes of pre-dispersion process;
b. During the flowing state of high-concentration oligo-layer graphene dispersion slurry, sequentially add polyrotaxane SA2405P-20 and silica powder OK-412 then continue high-speed stirring to form a uniformly flowing oligo-layer graphene composite fluid; wherein, high-concentration oligo-layer graphene dispersion slurry/SA2405P-20/OK-412 is mixed at a ratio of 10/0.4/0.6, the effective addition amount of graphene is 20%, the viscosity range is between 5000~10000cps, and the slurry particle size distribution D90 is less than 15um;
c. Making a graphene-polyurethane composite fluid by mixing raw materials of oligo-layer graphene composite fluid and polyurethane resin; wherein the solid weight content of the polyurethane resin is between 15-20%, the viscosity range is between 800cps~1500cps, and the oligo-layer graphene composite fluid and polyurethane resin are processed in a high-speed homogenization process at a weight ratio of 1/9, with a stirring speed of 2500 rpm, a die diameter of 6 cm, a die spacing of 1 mm, and a processing time of 1 hour. The effective solid content of the graphene-polyurethane composite fluid is between 15-18%, the flow viscosity is between 1000-1500cps;
d. The graphene-polyurethane composite fluid is continuously coated and molding on a base substrate material with the release force to form a thermally conductive and breathable membrane layer; wherein the base substrate material is a release paper with a release layer on the surface, the basis weight is 190~200gsm, and the surface of the release layer of the release paper is continuously coated with the knife coating method, then after high temperature drying, a thermally conductive and breathable membrane layer is formed on the release paper. The continuous coating molding method means that the finished product is finished by one coating, the coating speed is 10-15m/min, the molding width is at least 1540cm, the molding length is at least 1000m, and the molding drying temperature is within the range of 90~180°C, and the effective addition amount of graphene is 10%; and
e. By the release winding process, the thermally conductive and breathable membrane layer is enable to form an independently moldable thermally conductive and breathable membrane; wherein, the process conditions in the release winding process are: the winding speed is 15~20m/min, and the tension is less than 3kg, the paper roll size is less than 6 inches, the thickness of the thermally conductive and breathable membrane is 20um, the basis weight is 23gsm, the horizontal thermal conductivity is 4.35W/mK, the vertical thermal conductivity is 0.22W/mK, the moisture permeability is 50000g/m²/24h, the water pressure resistance value is 10000mmH₂O, the visible light transmittance is 0%, the tensile strength is 216Kgf/cm², and the elongation at break is 179%.

### Embodiment 5

a. The active agent, a solvent and an oligo-layer graphene are formed into a the slurry of high-concentration oligo-layer graphene after applying high-speed grinding and shear dispersion; wherein: the carbon content of graphene is ≥99%, the graphene thickness is ≦2.5nm, the average distribution range of graphene membrane diameter is between 0.1µm~1.5µm, the optimal distribution range is between 0.3µm~0.8µm, the surface oxygen content is <0.1%, and a high-concentration oligo-layer graphene dispersion slurry with the concentration difference between the upper and lower parts of the tank for 5% will be generated after 20 minutes of pre-dispersion process;
b. During the flowing state of high-concentration oligo-layer graphene dispersion slurry, sequentially add polyrotaxane SA2405P-20 and silica powder OK-412 then continue high-speed stirring to form a uniformly flowing oligo-layer graphene composite fluid; wherein, high-concentration oligo-layer graphene dispersion slurry/SA2405P-20/OK-412 is mixed at a ratio of 10/0.3/0.4, the effective addition amount of graphene is 20%, the viscosity range is between 5000~10000cps, and the slurry particle size distribution D90 is less than 15um;
c. Making a graphene-polyurethane composite fluid by mixing raw materials of oligo-layer graphene composite fluid and polyurethane resin; wherein the solid weight content of the polyurethane resin is between 15-20%, the viscosity range is between 800cps~1500cps, and the oligo-layer graphene composite fluid and polyurethane resin are processed in a high-speed homogenization process at a weight ratio of 1/5.85, with a stirring speed of 2500 rpm, a die diameter of 6 cm, a die spacing of 1 mm, and a processing time of 1 hour. The effective solid content of the graphene-polyurethane composite fluid is between 15-18%, the flow viscosity is between 1000-1500cps;
d. The graphene-polyurethane composite fluid is continuously coated and molding on a base substrate material with the release force to form a thermally conductive and breathable membrane layer; wherein the base substrate material is a release paper with a release layer on the surface, the basis weight is 190~200gsm, and the surface of the release layer of the release paper is continuously coated with the knife coating method, then after high temperature drying, a thermally conductive and breathable membrane layer is formed on the release paper. The continuous coating molding method means that the finished product is finished by one coating, the coating speed is 10-15m/min, the molding width is at least 1540cm, the molding length is at least 1000m, and the molding drying temperature is within the range of 90~180°C, and the effective addition amount of graphene is 15%; and
e. By the release winding process, the thermally conductive and breathable membrane layer is enable to form an independently moldable thermally conductive and breathable membrane; wherein, the process conditions in the release winding process are: the winding speed is 15~20m/min, and the tension is less than 3kg, the paper roll size is less than 6 inches, the thickness of the thermally conductive and breathable membrane is 20um, the basis weight is 24gsm, the horizontal thermal conductivity is 5.00W/mK, the vertical thermal conductivity is 0.16W/mK, the moisture permeability is 50000g/m²/24h, the water pressure resistance value is 10000mmH₂O, the visible light transmittance is 0%, the tensile strength is 152Kgf/cm², and the elongation at break is 97%.

### Embodiment 6

a. The active agent, a solvent and an oligo-layer graphene are formed into a the slurry of high-concentration oligo-layer graphene after applying high-speed grinding and shear dispersion; wherein: the carbon content of graphene is ≥99%, the graphene thickness is ≦2.5nm, the average distribution range of graphene membrane diameter is between 0.1µm~1.5µm, the optimal distribution range is between 0.3µm~0.8µm, the surface oxygen content is <0.1%, and a high-concentration oligo-layer graphene dispersion slurry with the concentration difference between the upper and lower parts of the tank for 5% will be generated after 20 minutes of pre-dispersion process;
b. During the flowing state of high-concentration oligo-layer graphene dispersion slurry, sequentially add polyrotaxane SA2405P-20 and silica powder OK-412 then continue high-speed stirring to form a uniformly flowing oligo-layer graphene composite fluid; wherein, high-concentration oligo-layer graphene dispersion slurry/SA2405P-20/OK-412 is mixed at a ratio of 10/0.2/0.3, the effective addition amount of graphene is 20%, the viscosity range is between 5000-10000cps, and the slurry particle size distribution D90 is less than 15um;
c. Making a graphene-polyurethane composite fluid by mixing raw materials of oligo-layer graphene composite fluid and polyurethane resin; wherein the solid weight content of the polyurethane resin is between 15-20%, the viscosity range is between 800cps~1500cps, and the oligo-layer graphene composite fluid and polyurethane resin are processed in a high-speed homogenization process at a weight ratio of 1/4.2, with a stirring speed of 2500 rpm, a die diameter of 6 cm, a die spacing of 1 mm, and a processing time of 1 hour. The effective solid content of the graphene-polyurethane composite fluid is between 15-18%, the flow viscosity is between 1000-1500cps;
d. The graphene-polyurethane composite fluid is continuously coated and molding on a base substrate material with the release force to form a thermally conductive and breathable membrane layer; wherein the base substrate material is a release paper with a release layer on the surface, the basis weight is 190~200gsm, and the surface of the release layer of the release paper is continuously coated with the knife coating method, then after high temperature drying, a thermally conductive and breathable membrane layer is formed on the release paper. The continuous coating molding method means that the finished product is finished by one coating, the coating speed is 10-15m/min, the molding width is at least 1540cm, the molding length is at least 1000m, and the molding drying temperature is within the range of 90~180°C, and the effective addition amount of graphene is 20%; and
e. By the release winding process, the thermally conductive and breathable membrane layer is enable to form an independently moldable thermally conductive and breathable membrane; wherein, the process conditions in the release winding process are: the winding speed is 15~20m/min, and the tension is less than 3kg, the paper roll size is less than 6 inches, the thickness of the thermally conductive and breathable membrane is 20um, the basis weight is 25gsm, the horizontal thermal conductivity is 9.19W/mK, the vertical thermal conductivity is 0.16W/mK, the moisture permeability is 50000g/m²/24h, the water pressure resistance value is 10000mmH₂O, and the visible light transmittance is 0%.

### Comparative Example 1 (no graphene added)

a. Polyurethane resin composite fluid is prepared by high-speed mixing of raw materials such as polyurethane resin and composite additives, wherein the composite additives include polyrotaxane SA2405P-20 and silica powder OK-412, polyurethane resin must undergo a pre-dispersion process for 20 minutes to produce a uniform flow state, then polyurethane resin /SA2405P-20/OK-412 is mixed at a ratio of 10/0.4/0.5, first use a high-speed mixing method to evenly disperse, and then use a high-speed homogenization process to form a uniformly flowing polyurethane resin composite fluid with a stirring speed of 2500 rpm, a die diameter of 6 cm, a die spacing of 1 mm, and a processing time of 1 hour. The solid content of the polyurethane resin is 95%, the flow viscosity is between 3000-5000cps;
b. The polyurethane resin composite fluid is continuously coated and molding on a base substrate material with the release force to form a polyurethane resin membrane layer; wherein the base substrate material is a release paper with a release layer on the surface, the basis weight is 190~200gsm, and the surface of the release layer of the release paper is continuously coated with the knife coating method, then after high temperature drying, a polyurethane resin membrane layer is formed on the release paper. The continuous coating molding method means that the finished product is finished by one coating, the coating speed is 10~15m/min, the molding width is at least 1540cm, the molding length is at least 1000m, and the molding drying temperature is within the range of 90~180°C; and
c. By the release winding process, the polyurethane resin membrane layer is enable to form an independently polyurethane resin membrane; wherein, the process conditions in the release winding process are: the winding speed is 15~20m/min, and the tension is less than 3kg, the paper roll size is less than 6 inches, the thickness of the polyurethane resin membrane is 20um, the basis weight is 21gsm, the horizontal thermal conductivity is 0.17W/mK, the vertical thermal conductivity is 0.17W/mK, the moisture permeability is 70000g/m²/24h, the water pressure resistance value is 10000mmH₂O, the visible light transmittance is 95%, the tensile strength is 362Kgf/cm², and the elongation at break is 457%.

### Comparative Example 2 (no polyrotaxane added)

a. The active agent, a solvent and an oligo-layer graphene are formed into a the slurry of high-concentration oligo-layer graphene after applying high-speed grinding and shear dispersion; wherein: the carbon content of graphene is ≥99%, the graphene thickness is ≦2.5nm, the average distribution range of graphene membrane diameter is between 0.1µm~1.5µm, the optimal distribution range is between 0.3µm~0.8µm, the surface oxygen content is <0.1%, and a high-concentration oligo-layer graphene dispersion slurry with the concentration difference between the upper and lower parts of the tank for 5% will be generated after 20 minutes of pre-dispersion process;
b. During the flowing state of high-concentration oligo-layer graphene dispersion slurry, add silica powder OK-412 then continue high-speed stirring to form a uniformly flowing oligo-layer graphene composite fluid; wherein, high-concentration oligo-layer graphene dispersion slurry/OK-412 is mixed at a ratio of 10/0.3, the effective addition amount of graphene is 20%, the viscosity range is between 5000-10000cps, and the slurry particle size distribution D90 is less than 15um;
c. Making a graphene-polyurethane composite fluid by mixing raw materials of oligo-layer graphene composite fluid and polyurethane resin; wherein the solid weight content of the polyurethane resin is between 15-20%, the viscosity range is between 800cps~1500cps, and the oligo-layer graphene composite fluid and polyurethane resin are processed in a high-speed homogenization process at a weight ratio of 1/9.6, with a stirring speed of 2500 rpm, a die diameter of 6 cm, a die spacing of 1 mm, and a processing time of 1 hour. The effective solid content of the graphene-polyurethane composite fluid is between 15-18%, the flow viscosity is between 2000~4000cps;
d. The graphene-polyurethane composite fluid is continuously coated and molding on a base substrate material with the release force to form a thermally conductive and breathable membrane layer; wherein the base substrate material is a release paper with a release layer on the surface, the basis weight is 190~200gsm, and the surface of the release layer of the release paper is continuously coated with the knife coating method, then after high temperature drying, a thermally conductive and breathable membrane layer is formed on the release paper. The continuous coating molding method means that the finished product is finished by one coating, the coating speed is 10-15m/min, the molding width is at least 1540cm, the molding length is at least 1000m, and the molding drying temperature is within the range of 90~180°C, and the effective addition amount of graphene is 10%; and
e. By the release winding process, the thermally conductive and breathable membrane layer is enable to form an independently moldable thermally conductive and breathable membrane; wherein, the process conditions in the release winding process are: the winding speed is 15~20m/min, and the tension is less than 3kg, the paper roll size is less than 6 inches, the thickness of the thermally conductive and breathable membrane is 20um, the basis weight is 23gsm, the horizontal thermal conductivity is 3.65W/mK, the vertical thermal conductivity is 0.20W/mK, the moisture permeability is 50000g/m²/24h, the water pressure resistance value is 10000mmH₂O, the visible light transmittance is 0.1%, the tensile strength is 178Kgf/cm², and the elongation at break is 91%.

### Comparative Example 3 (no graphene added, instead boron nitride is added)

a. The active agent, a solvent and a boron nitride are formed into a slurry of high-concentration boron nitride after applying high-speed grinding and shear dispersion; wherein the boron nitride thickness is ≥30nm, the average diameter distribution range is between 10µm~30µm;
b. During the flowing state of high-concentration boron nitride dispersion slurry, add polyrotaxane SA2405P-20 and silica powder OK-412 then continue high-speed stirring to form a uniformly flowing boron nitride composite fluid;
   wherein, high-concentration boron nitride dispersion slurry/ SA2405P-20/OK-412 is mixed at a ratio of 10/0.2/0.3, the effective addition amount of boron nitride is 20%, the viscosity range is between 3000~50000cps, and the slurry particle size distribution D90 is less than 15um;
c. Making a boron nitride composite fluid by mixing raw materials of boron nitride composite fluid and polyurethane resin; wherein the solid weight content of the polyurethane resin is between 15-20%, the viscosity range is between 800cps~1500cps, and the oligo-layer graphene composite fluid and polyurethane resin are processed in a high-speed homogenization process at a weight ratio of 1/9, with a stirring speed of 2500 rpm, a die diameter of 6 cm, a die spacing of 1 mm, and a processing time of 1 hour. The effective solid content of the graphene-polyurethane composite fluid is between 15-18%, the flow viscosity is between 1000-3000cps;
d. The boron nitride composite fluid is continuously coated and molding on a base substrate material with the release force to form a thermally conductive and breathable membrane layer; wherein the base substrate material is a release paper with a release layer on the surface, the basis weight is 190~200gsm, and the surface of the release layer of the release paper is continuously coated with the knife coating method, then after high temperature drying, a thermally conductive and breathable membrane layer is formed on the release paper. The continuous coating molding method means that the finished product is finished by one coating, the coating speed is 10~15m/min, the molding width is at least 1540cm, the molding length is at least 1000m, and the molding drying temperature is within the range of 90~180°C, and the effective addition amount of graphene is 10%; and
e. By the release winding process, the thermally conductive and breathable membrane layer is enable to form an independently moldable thermally conductive and breathable membrane; wherein, the process conditions in the release winding process are: the winding speed is 15~20m/min, and the tension is less than 3kg, the paper roll size is less than 6 inches, the thickness of the thermally conductive and breathable membrane is 20um, the basis weight is 23gsm, the horizontal thermal conductivity is 3.1W/mK, the vertical thermal conductivity is 0.18W/mK, the moisture permeability is 50000g/m²/24h, the water pressure resistance value is 10000mmH₂O, and the visible light transmittance is 70%.

The key numerical values of the aforementioned embodiments 1 to 6 and comparative examples 1 to 3 are organized in the following table:

| | E1 | E2 | E3 | E4 | E5 | E6 | C1 | C2 | C3 |
|---|---|---|---|---|---|---|---|---|---|
| graphene (wt%) | 3 | 5 | 7 | 10 | 15 | 20 | 0 | 10 | 0 |
| boron nitride (wt%) | 0 | 0 | 0 | 0 | 0 | 0 | 0 | 0 | 10 |
| silica (wt%) | 3 | 3 | 3 | 3 | 3 | 3 | 3 | 3 | 3 |
| polyurethane (wt%) | 92 | 90 | 88 | 85 | 80 | 75 | 95 | 85 | 85 |
| polyrotaxane (wt%) | 2 | 2 | 2 | 2 | 2 | 2 | 2 | 0 | 2 |
| membrane thickness(um) | 20 | 20 | 20 | 20 | 20 | 20 | 20 | 20 | 20 |
| membrane weight(gsm) | 22 | 22 | 22 | 23 | 24 | 25 | 21 | 21 | 23 |
| horizontal thermal conductivity (W/mk) | 3.04 | 3.42 | 4.03 | 4.35 | 5 | 9.19 | 0.17 | 3.65 | 0.18 |
| vertical thermal conductivity (W/mk) | 0.11 | 0.22 | 0.19 | 0.22 | 0.16 | 0.16 | 0.17 | 0.20 | 0.18 |
| moisture permeability (g/m²/24h) | 50000 | 50000 | 50000 | 50000 | 50000 | 50000 | 70000 | 50000 | 50000 |
| water pressure resistance (mmH₂O) | 10000 | 10000 | 10000 | 10000 | 10000 | 10000 | 10000 | 10000 | 10000 |
| transmittance (%) | 0.5 | 0.3 | 0.1 | 0 | 0 | 0 | 95 | 0.1 | 70 |
| tensile strength (Kgf/cm²) | - | 285 | 268 | 216 | 152 | - | 362 | 178 | - |
| elongation at break (%) | - | 326 | 281 | 179 | 97 | - | 457 | 91 | - |

Referring to the above table, adding graphene to polyurethane resin (substrate) can greatly increase the horizontal thermal conductivity and can also significantly reduce the visible light transmittance; furthermore, since the extensibility of the original polyurethane membrane base material will deteriorate after make the graphene (thermal conductive additive) combine ,with the polyurethane membrane. The method used in the prior art to maintain the extensibility of the membrane is to increase the membrane thickness so that the tensile strength and elongation at break of the membrane can be maintained, but this will also cause problems such as increased membrane weight and material costs; Therefore, the present invention improves the tensile strength and elongation at break of the polyurethane resin (substrate) by adding polyrotaxane. From the above table, Embodiments 2 to 4 and Comparative Example 2 (without adding polyrotaxane) can tell that the effect of improving the tensile strength and elongation at break of the polyurethane resin (substrate) by adding polyrotaxane is particularly obvious when the solid weight content of graphene is 5~10wt%.

Therefore, in order to solve the problems of the prior art, the present invention prepares a thermally conductive and breathable membrane that oligo-layer graphene with a solid weight ratio of 1~30 wt% and a polyrotaxane with a solid weight content of 0.05 to 10wt% relative to the thermal conductive and breathable membrane to a polyurethane resin, in addition to the moisture permeability and waterproofness of polyurethane resin, the oligo-layer graphene also increase the thermal conductivity, and the dispersibility of oligo-layer graphene is improved by adding polyrotaxane and the extensibility of polyurethane resin is improved, making the formed thermal conductive and breathable membrane enable to maintain extensibility without increasing the membrane thickness. Wherein, the linear chain of the polyrotaxane's chemical structure has many chain alkyl group that can improve the interface affinity between graphene and polyurethane to improve the dispersion and alignment of graphene in the substrate. At the same time, there are also many reactive groups on its cyclic molecules that can react with the polyurethane substrate, resulting that during the curing and forming process of the thermally conductive and breathable membrane, the polyrotaxane will produce a crosslinking reaction with the reactive functional groups of the polyurethane and the crosslinking agent to achieve the creation of "movable crosslinking points" in the material, thereby increasing the extensibility of the thermally conductive and breathable membrane to 100-200%.

Although particular embodiments of the invention have been described in detail for purposes of illustration, various modifications and enhancements may be made without departing from the spirit and scope of the invention. Accordingly, the invention is not to be limited except as by the appended claims.

## Claims

1. A thermal conductive and breathable membrane, which adds an oligo-layer graphene with a solid weight ratio of 1~30 wt% and a polyrotaxane with a solid weight content of 0.05 to 10wt% relative to the thermal conductive and breathable membrane to a polyurethane resin, in addition to the moisture permeability and waterproofness of polyurethane resin, the oligo-layer graphene also increase the thermal conductivity, and the dispersibility of oligo-layer graphene is improved by adding polyrotaxane and the extensibility of polyurethane resin is improved, making the formed thermal conductive and breathable membrane enable to maintain extensibility without increasing the membrane thickness.

2. The thermal conductive and breathable membrane as claimed in claim 1, wherein the formed thermal conductive and breathable membrane has characteristics listed below, the thickness is between 15~40um, the basis weight range is between 20gsm~50gsm, the thermal conductivity coefficient in the plane direction ≧1W/mK, the thermal conductivity coefficient in the vertical direction ≦0.5W/mK, the moisture permeability measured according to JIS L1099-2012B-1 standard is at least 2000g/m²/24h, the water pressure resistance value measured according to JIS L1092B-2009 standard is at least 5000mmH₂O, the visible light transmittance <0.5%, the infrared and ultraviolet blocking rate >99.5%.

3. The thermal conductive and breathable membrane as claimed in claim 1, wherein is also added with silica with a solid weight ratio of 0.1 to 5wt% to prevent sticking, and a crosslinking agent is added to achieve crosslinking effect.

4. The thermal conductive and breathable membrane as claimed in claim 3, wherein the preferred solid weight ratio of the oligo-layer graphene is 5~10wt%, the preferred solid weight ratio of the polyrotaxane is 0.1~5wt%, the preferred solid weight ratio of the silica is 2~3wt%.

5. The thermal conductive and breathable membrane as claimed in claim 1, wherein the moisture permeability of the polyurethane resin measured according to JIS L1099-2012B-1 standard is at least 10000g/m²/24h, the average molecular weight of the polyrotaxane is between 100,000 and 500,000, at least 95% of the oligo-layer graphene has a lateral size of 6000~8000nm and thickness of 2~3nm, and the oxygen content of oligo-layer graphene is at least less than 0.1%.

6. The thermal conductive and breathable membrane as claimed in claim 3, wherein the polyrotaxanes include compounds of the linear chain polymers and the cyclic molecules; the linear chain polymers serve as the axis molecules in the compounds and have a molecular weight of more than 10,000 and can be chemically modified by endcapping groups; the cyclic molecules allow the linear chain molecules to pass through, and having at least one reactive group capable of producing a crosslinking reaction with the reactive groups in the polyurethane resin or the crosslinking agent.

7. The thermal conductive and breathable membrane as claimed in claim 6, wherein the main chain polymer of the linear chain polymer includes the copolymers of polyvinyl alcohol, polyvinylpyrrole, polyethylene glycol, polypropylene glycol, polyvinyl acetal resin, polydimethylsiloxane, polyamine, polyethyleneimine, polyolefin, polyester, polyvinyl chloride, polystyrene, acrylonitrile-styrene or derivatives thereof; the endcapping groups includes a dinitrophenyl group, an adamantyl group or a trityl group; the cyclic molecule includes a calixarene compound, a cryptether compound, a cyclic aromatic compound, a macrocyclic amine compound, a crown ether compound or a cyclodextrin compound.

8. The thermal conductive and breathable membrane as claimed in claim 7, wherein the linear chain polymers are the linear chain polymers based on polyethylene glycol; the cyclic molecules are the cyclodextrin, substituted cyclodextrin, or a reactive groups are further added into the substitution structure to obtain a substituted cyclodextrin compound.

9. The thermal conductive and breathable membrane as claimed in claim 8, wherein the reactive groups added into the cyclic molecules includes hydroxy, carboxyl, acrylic, methacrylic, epoxy or vinyl.

10. The thermal conductive and breathable membrane as claimed in claim 6, wherein the reactive groups in polyurethane resin include carbonyl groups, amine groups, hydroxyl groups and epoxy groups; crosslinking agents are ester polymer compounds containing isocyanate reactive groups, including the polymers or copolymers or derivatives of toluene diisocyanate, diphenylmethane diisocyanate isocyanate, hexamethylene diisocyanate, isophorone diisocyanate, 4,4'-dicyclohexylmethane diisocyanate, xylylene diisocyanate, tetramethylisoxylylene diisocyanate, etc., and the content of isocyanate reactive groups ranges from 5 to 25%.
